# FASCICULE DE BREVET EUROPEEN

(11) **EP 3 140 584 B1**
(45) Date de publication et mention de la délivrance du brevet: **03.07.2019**
(21) Numéro de dépôt: 15719493.7
(22) Date de dépôt: 06.05.2015
(51) Int. Cl.: F16L 57/06, F16L 11/08, E02F 7/10

(54) **CONDUITE FLEXIBLE NON LIÉE DE TRANSPORT D'UN MATÉRIAU ABRASIF, PROCÉDÉ ET UTILISATION ASSOCIÉS**
NICHT VERBUNDENES FLEXIBLES ROHR ZUM TRANSPORT VON ABRASIVEN MEDIEN, ZUGEHÖRIGES VERFAHREN UND ZUGEHÖRIGE VERWENDUNG
UNBONDED FLEXIBLE PIPE FOR TRANSPORTING AN ABRASIVE MATERIAL, ASSOCIATED METHOD AND ASSOCIATED USE

(30) Priorité: 06.05.2014 FR 1454094
(43) Date de publication de la demande: 15.03.2017
(73) Titulaire: Technip France, 92400 Courbevoie (FR)
(72) Inventeur: ESPINASSE, Philippe, F-76420 Bihorel (FR); PARENTEAU, Thomas, F-75011 Paris (FR)
(74) Mandataire: Lavoix
(86) Numéro de dépôt international: PCT/EP2015/059961
(87) Numéro de publication internationale: WO 2015/169859

(56) Documents cités:
- EP-A1- 0 429 426
- DE-A1- 1 810 369
- US-A- 3 888 714
- US-A- 5 634 497
- US-A1- 2011 203 695

## Description

La présente invention concerne une conduite flexible non liée de transport d'un matériau abrasif selon le préambule de la revendication 1.

La conduite est en particulier destinée au transport, à travers une étendue d'eau, d'un matériau abrasif recueilli sur le fond de l'étendue d'eau. L'étendue d'eau est par exemple un océan, une mer, un lac ou une rivière

En variante, la conduite est utilisée pour des activités minières en surface, et non à travers une étendue d'eau.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

D'une manière connue, une telle conduite comporte une structure interne tubulaire comprenant au moins une gaine de pression. La conduite comporte des nappes d'armures de traction disposées autour de la structure interne tubulaire.

La conduite comporte en outre, dans certains cas, une voûte de pression, formée d'au moins un fil agrafé présentant par exemple un profil en T ou un profil en Z. Une frette peut également être enroulée en spirale autour de la voûte de pression.

Le matériau abrasif est recueilli au fond de l'étendue d'eau par exemple dans le cadre d'une exploitation minière d'un fond sous-marin, ou encore lors de travaux de terrassement des sols sous-marins en vue de la mise en place d'installations de production d'hydrocarbures. Le matériau abrasif comprend par exemple des roches ou/et des sédiments.

En particulier, le matériau abrasif est formé par des agrégats miniers désagrégés par des machines de coupe excavatrices sous-marines. Ces agrégats sont obtenus notamment à partir de dépôts de sulfure massif (désignés par le terme anglais « Seabed Massive Sulfide » ou SMS) contenant des traces métalliques, notamment de cuivre, de plomb, de zinc, d'or, d'argent, ou d'autres métaux.

Dans certains cas, ces matériaux sont situés à des profondeurs significatives, supérieures parfois à plusieurs centaines de mètres. Dans ce cadre, WO 2009/013434 décrit un dispositif d'extraction de matériaux comprenant une conduite du type précité permettant de ramener le matériau depuis l'ensemble d'extraction situé au fond de l'étendue d'eau vers la surface.

Le matériau récupéré au fond de l'étendue d'eau est parfois très abrasif et engendre une usure importante de la conduite de transport, notamment par des mécanismes d'usure coupante (« cutting wear » en anglais) ou par écrasement (« gouging wear » en anglais).

Pour assurer l'acheminement du matériau abrasif vers la surface, il est donc nécessaire de disposer d'une conduite flexible qui présente une bonne résistance mécanique, notamment en traction et en pression, et qui présente également une excellente résistance à l'abrasion, compte tenu de la taille et de l'aspect des agrégats miniers à acheminer en surface, pendant une période de temps pouvant atteindre plusieurs années, voire plusieurs dizaines d'années.

Une conduite destinée à transporter des matériaux abrasifs est par exemple décrite dans les documents EP 0429426 A1 et US 2011/0203695 A1.

Un but de l'invention est donc de disposer d'une conduite flexible de transport de fluide, propre à convoyer un matériau abrasif depuis des profondeurs importantes, en garantissant un débit suffisant et une durée de service significative, par exemple de plusieurs années.

À cet effet, l'invention a pour objet une conduite selon la revendication 1.

La conduite selon l'invention peut comprendre l'une ou plusieurs des caractéristiques des revendications 2 à 10, prise(s) isolément ou suivant toute combinaison techniquement possible.

L'invention a aussi pour objet un procédé de fabrication selon la revendication 11.

Le procédé selon l'invention peut comprendre l'une ou plusieurs des caractéristiques des revendications 12 à 14, prise(s) isolément ou suivant toute combinaison techniquement possible.

L'invention a également pour objet l'utilisation d'une conduite selon la revendication 15.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une conduite flexible selon l'invention ;
- la figure 2 est une vue schématique en coupe partielle d'une installation d'exploitation d'un matériau minier sur le fond d'une étendue d'eau, comprenant une conduite flexible selon l'invention ;
- la figure 3 est une vue en perspective partiellement écorchée de la couche de protection interne de la conduite de la figure 1 ;
- la figure 4 est une vue schématique des différentes étapes d'un premier procédé de fabrication d'une conduite flexible selon l'invention ;
- la figure 5 est une vue schématique en coupe partielle d'une étape d'enroulement d'une bande destinée à former la couche de protection interne de la conduite de la figure 1 ;
- les figures 6 à 10 illustrent diverses variantes d'assemblage de la bande enroulée formant la couche de protection interne de la conduite de la figure 1 ; et
- la figure 11 est une vue analogue à la figure 3 d'une variante de couche de protection interne de la conduite de la figure 1.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

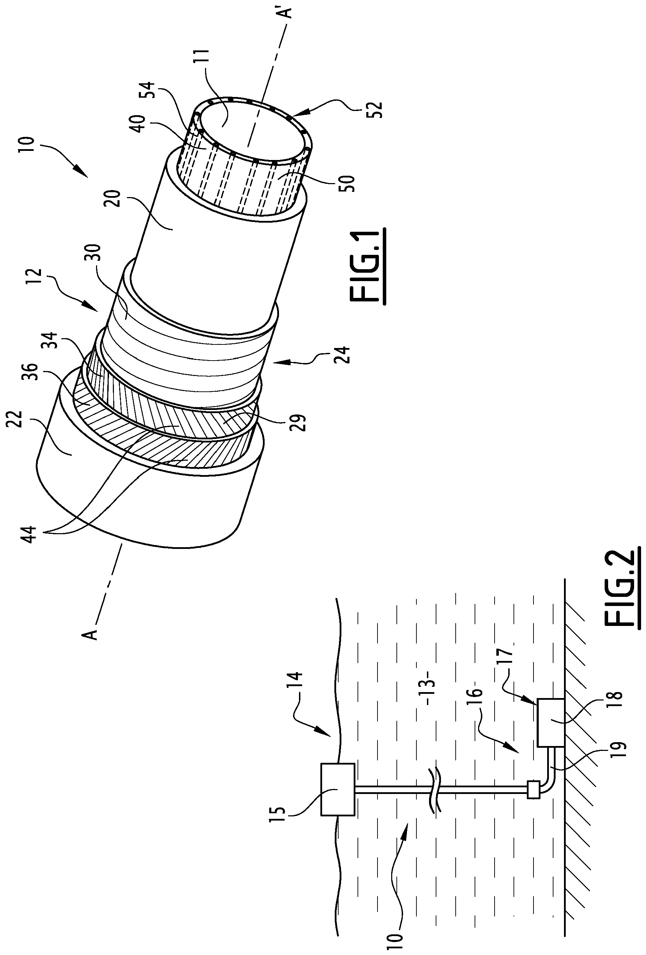

Une première conduite flexible 10 selon l'invention, est illustrée partiellement par les figures 1 à 3.

La conduite flexible 10 comporte un tronçon central 12 illustré en partie sur la figure 1. Elle comporte, à chacune des extrémités axiales du tronçon central 12, un embout d'extrémité (non représenté).

En référence à la figure 1, la conduite 10 délimite un passage central 11 de circulation d'un matériau abrasif.

Le passage central 11 s'étend suivant un axe A-A', entre l'extrémité amont et l'extrémité aval de la conduite 10. Il débouche à travers les embouts.

Le diamètre du passage central 11 est avantageusement compris entre 50 mm et 500 mm.

Le matériau abrasif comprend par exemple des roches ou/et des sédiments dispersés dans de l'eau ou dans un autre médium fluide à plus haute viscosité et densité, comme de la boue.

En particulier, le matériau abrasif est formé par des agrégats miniers désagrégés par des machines de coupe excavatrices sous-marines. Ces agrégats proviennent par exemple de la collecte de nodules déposés sur le fond sous-marins ou sont obtenus à partir de dépôts de sulfure massif (désignés par le terme anglais « Seabed Massive Sulfide » ou SMS) contenant des traces métalliques, notamment de cuivre, de plomb, de zinc, d'or, d'argent, ou d'autres métaux.

La conduite flexible 10 est destinée à être disposée à travers une étendue d'eau 13 dans une installation 14 d'exploitation du matériau, visible sur la figure 2

L'étendue d'eau 13 est par exemple, une mer, un lac ou un océan. La profondeur de l'étendue d'eau 13 au droit de l'installation d'exploitation 14 est par exemple comprise entre 500 m et 5000 m.

De préférence, le tronçon central 12 de la conduite s'étend de manière continue sur une longueur supérieure à 50 m, notamment supérieure à 100 m, et par exemple comprise entre 250 m et 3000 m.

L'installation d'exploitation 14 comporte un ensemble de surface 15, généralement flottant, et un ensemble de fond 16, qui sont de préférence raccordés entre eux par la conduite flexible 10.

L'ensemble de fond 16 comporte un dispositif 17 de prélèvement de matériau sur le fond de l'étendue d'eau 13, par exemple un véhicule excavateur 18 mobile sur le fond de l'étendue d'eau 13, ou des pinces mobiles de prélèvement.

Le dispositif de prélèvement 17 est raccordé à la conduite 10 par exemple par un lien souple 19 de type « jumper ».

La conduite flexible 10 est une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre, à l'exception d'une couche interne de protection qui est fixée sur la première gaine, comme on le verra plus bas. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

La conduite 10 comporte au moins une première gaine 20 à base de matériau polymère constituant une gaine de pression.

La conduite 10 comprend une deuxième gaine externe 22, destinée à la protection de la conduite 10. La deuxième gaine 22 délimite avec la première graine 20 un espace annulaire 24.

Dans cet espace annulaire 24, la conduite 10 comporte avantageusement une voûte de pression 30 et une pluralité de couches d'armures de traction 34, 36 disposées extérieurement par rapport à la voûte de pression 30.

Selon l'invention, la conduite flexible 10 comprend une couche interne de protection 40, disposée dans la première gaine 20 pour protéger la première gaine 20 du matériau circulant dans le passage central 11.

De manière connue, la gaine interne 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine interne 20 est par exemple comprise entre 5 mm et 20 mm.

Dans cet exemple, la voûte de pression 30 est destinée à reprendre les efforts liés à la pression régnant à l'intérieur de la gaine interne 20. Elle est par exemple formée d'un fil profilé métallique entouré en hélice autour de la gaine 20. Le fil profilé présente de préférence une géométrie, notamment en forme de Z, en forme de T, de U, de K, de X ou de I.

La voûte de pression 30 est enroulée en hélice à pas court autour de la gaine interne 20, c'est-à-dire avec un angle d'hélice de valeur absolue proche de 90°, typiquement compris entre 75° et 90°.

Dans l'exemple représenté sur la figure 1, la conduite flexible 10 comporte au moins une paire de couches d'armures 34, 36.

Chaque paire comporte une première couche d'armures 34 appliquée sur la voûte 30, et une deuxième couche d'armures 36, disposée autour de la première couche d'armures 34.

Chaque couche d'armures 34, 36 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 55°, et est typiquement comprise entre 15° et 55°.

Dans l'exemple représenté sur la figure 1, la valeur absolue de l'angle d'hélice de chaque couche d'armures 34, 36 est notamment comprise entre 30° et 55°

Les éléments d'armure 44 d'une première couche 34 sont enroulés généralement suivant un angle opposé par rapport aux éléments d'armure 44 d'une deuxième couche 36. Ainsi, si l'angle d'enroulement des éléments d'armure 44 de la première couche 34 est égal à + α, α étant compris entre 15° et 55°, l'angle d'enroulement des éléments d'armure 44 de la deuxième couche 36 disposée au contact de la première couche 34 est par exemple de - α, avec α compris entre 15° et 55°.

Les éléments d'armure 44 sont par exemple formés par des fils métalliques ou en matériau composite, ou par des rubans à résistance mécanique élevée.

Chaque couche d'armures 34, 36 repose avantageusement sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22.

La gaine externe 22 est destinée à protéger l'espace annulaire 24 en empêchant la pénétration de fluide depuis l'extérieur de la conduite flexible 10 vers l'intérieur. Elle est avantageusement réalisée en matériau polymère, notamment à base d'un polyoléfine, tel que du polyéthylène, à base d'un polyamide, tel que du PA11 ou du PA12,.

L'épaisseur de la gaine externe 22 est par exemple comprise entre 5 mm et 15 mm.

La couche interne de protection 40 est disposée dans la gaine tubulaire 20. Elle est avantageusement fixée dans la gaine tubulaire 20, lors de la fabrication de la gaine tubulaire 20. Elle présente une forme tubulaire d'axe A-A'.

La couche interne de protection 40 couvre la totalité de la surface interne de la gaine tubulaire 20 dirigée vers l'axe A-A' dans le tronçon central 12 de la conduite 10. Il n'est pas nécessaire que la couche interne de protection 40 assure une fonction d'étanchéité.

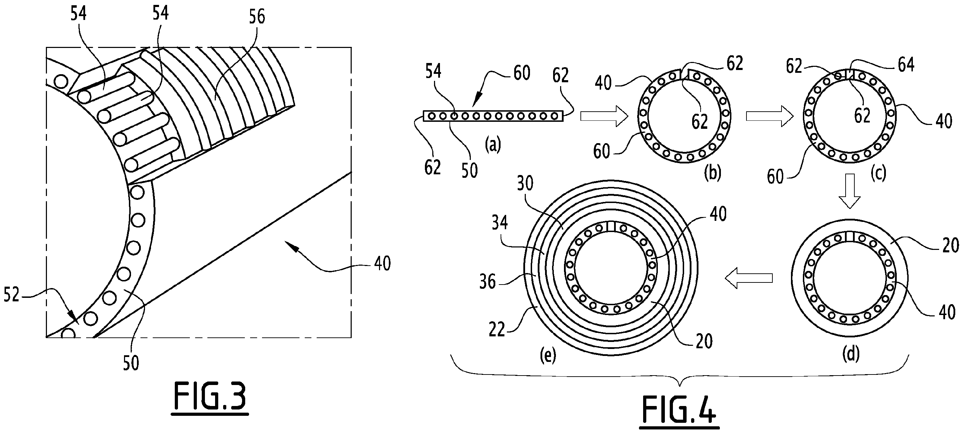

Selon l'invention, et en référence à la figure 3, la couche interne de protection comporte une matrice 50 en matériau élastomère et un ensemble 52 de renfort longitudinal, noyé dans la matrice 50.

La matrice en élastomère 50 est formée d'un matériau choisi parmi un caoutchouc, notamment un caoutchouc naturel, un caoutchouc artificiel de type SBR (caoutchouc de styrène butadiène), BR (caoutchouc de butadiène), NBR (caoutchouc de nitrile butadiène), CR (caoutchouc de chloroprène), IIR (caoutchouc de butyle) EPDM (caoutchouc d'éthylène-propylène-diène monomère), un thermoplastique polyuréthane, ou un thermoplastique élastomère.

Ces propriétés élastiques assurent une meilleure résistance aux mécanismes d'usure, grâce à la déformation que peuvent subir la matrice 50 au contact du matériau abrasif et permettent aussi d'éviter la propagation de fissures

L'épaisseur de la matrice 50 et donc de la couche interne de protection 40 est de préférence supérieure à 10 mm, et est notamment comprise entre 15 mm et 30 mm.

Le diamètre interne de la matrice 50 et donc de la couche interne de protection 40 est supérieur à 10 cm, et est notamment compris entre 15 cm et 35 cm.

Dans l'exemple illustré par la figure 3, l'ensemble de renfort longitudinal 52 comporte une pluralité d'éléments métalliques filiformes 54 noyés dans la matrice.

Chaque élément filiforme 54 est de préférence formé par un fil homogène continu, par exemple réalisé en acier, notamment de type corde métallique (ou « steel cord » en langue anglaise), ou en fibre synthéthique haute résistance de type aramide, polyéthylène à très haut poids moléculaire (ou « UHMWPE ») ou carbone.

Le diamètre de chaque élément 54 est inférieur à l'épaisseur de la matrice 50. Ce diamètre est par exemple compris entre 0.15 mm et 1 mm.

Au moins une partie des éléments filiformes 54 s'étendent axialement le long de l'axe A-A', parallèlement à l'axe A-A', ou de manière inclinée par rapport à l'axe A-A'.

Les éléments filiformes 54 sont ici disposés parallèles les uns aux autres, à l'écart circonférentiellement l'un de l'autre.

Dans une variante, l'ensemble de renfort longitudinal 52 comporte en outre des éléments circonférentiels 56, visibles partiellement sur la figure 3, entourant les éléments filiformes 54 autour de l'axe A-A', sans être liés aux éléments filiformes 54.

Dans un mode de réalisation illustré sur la figure 4, la couche interne de protection 54 est formée à base d'une feuille 60 de matériau repliée sur elle-même suivant les bords latéraux 62 de la feuille 60 pour placer les bords 62 bout à bout, et d'un ensemble 64 d'assemblage des bords latéraux 62 de la feuille 60.

La feuille 60 présente une largeur sensiblement égale à la circonférence de la couche interne de protection 40, et une longueur sensiblement égale à la longueur de la couche interne de protection 40, avantageusement comprise entre 50 m et 3000 m.

Elle présente une épaisseur sensiblement égale à celle de la couche interne de protection 40, notamment comprise entre 20 mm et 30 mm

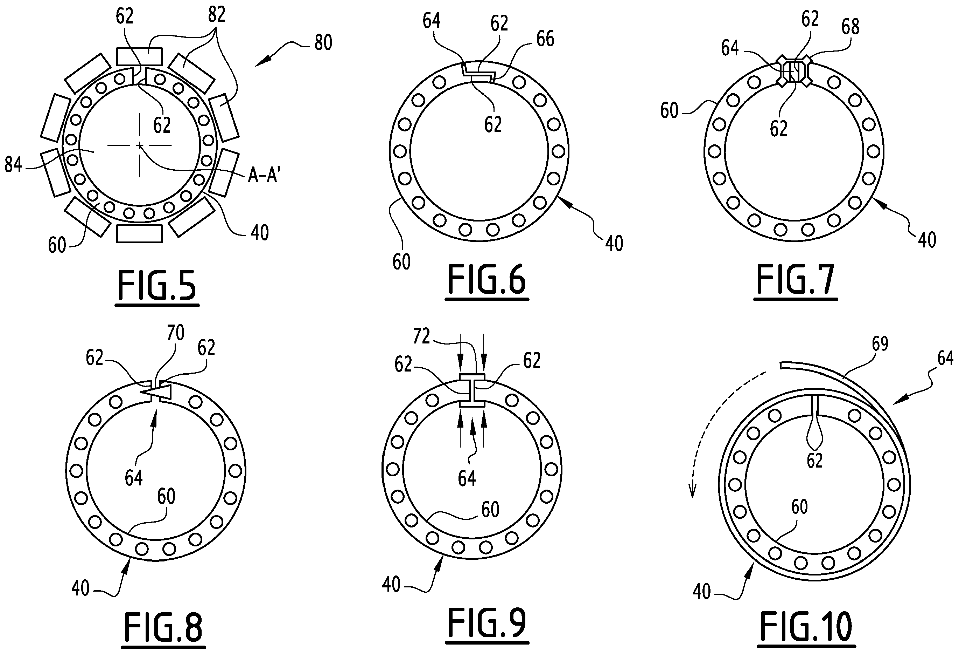

L'ensemble d'assemblage 64 comporte par exemple de la colle 66 (figure 6), des agrafes 68 (figure 7), un ruban adhésif 69 pouvant être renforcé par des fils métalliques ou synthétiques (figure 10), un mécanisme d'encliquetage 70 (figure 8), un organe de sertissage 72 (figure 9).

L'ensemble d'assemblage 64 s'étend suivant une génératrice de la couche interne de protection 40, avantageusement parallèlement à l'axe A-A', entre les bords latéraux 62, pour fixer latéralement les bords latéraux 62 l'un contre l'autre, suivant leur tranche.

L'assemblage s'effectue bord à bord, sans superposition entre les bords latéraux 62. L'épaisseur de la couche interne de protection 40 est maintenue constante sur une circonférence autour de l'axe A-A'.

La fabrication de la conduite 10 va maintenant être décrite, en regard des figures 4 à 9.

Initialement, la couche interne de protection 40 est formée.

Avantageusement, une feuille 60 comprenant la matrice 50 et les éléments de renfort 52 est fournie. Les bords 62 de la feuille 60 sont alors disjoints (voir étape (a) sur la figure 4).

Cette feuille 60 a par exemple été réalisée par extrusion et réticulation de la matrice 50, en noyant les éléments de renfort 52.

La feuille 60 est ensuite enroulée sur elle-même par pliage pour rapprocher l'un de l'autre les bords 62 (voir étape (b) sur la figure 4).

À cet effet, comme illustré par la figure 5, la feuille est pliée, puis est passée dans un dispositif de conformation 80 comportant une pluralité de rouleaux 82 disposés le long d'une circonférence autour d'un axe A-A' d'enroulement.

La feuille 60 enroulée est introduite dans le passage central 84 défini entre les rouleaux 82 pour permettre un rapprochement et un alignement adéquat des bords 62 l'un en regard de l'autre.

Avantageusement, le nombre de rouleaux 82 sur une circonférence est strictement supérieur à 4, notamment supérieur à 8, et est par exemple compris entre 6 et 14.

Ensuite, l'ensemble d'assemblage 64 est mis en place entre les bords 62 pour fixer les bords 62 l'un sur l'autre et fermer la couche interne de protection 40 le long d'une génératrice suivant l'axe A-A' (voir étape (c) sur la figure 4).

De préférence, une bande de protection est enroulée autour de la feuille 60 enroulée pour maintenir la géométrie en tube. La couche interne de protection 40 ainsi formée est ensuite avantageusement enroulée sur une bobine en vue de son stockage et de son transport. La couche interne de protection 40 peut également être fabriquée avec une couture spiralée pour éviter un allongement différentiel des renforts longitudinaux 54 lors de l'enroulage sur bobine.

Puis, la couche 40 est déroulée pour la faire passer à travers une filière d'extrusion. La première gaine 20 est formée autour de la couche interne de protection 40, par exemple par extrusion du polymère la constituant (voir étape (d) sur la figure 4).

Ensuite, la voûte 30 est placée autour de la première gaine 20. Les couches d'armures internes 34, 36 sont ensuite mises en place autour de la voûte 30.

La gaine externe 22 est alors formée autour des couches d'armures externes 38, 40, avantageusement par extrusion du polymère la constituant (voir étape (d) sur la figure 4).

Les embouts de la conduite 10 sont alors installés aux extrémités du tronçon central 12. Cette installation obture l'espace annulaire 26.

Une fois la conduite 10 installée dans l'étendue d'eau, le matériau abrasif collecté dans l'ensemble de fond 16 circule à travers la conduite flexible 10 jusqu'à l'ensemble de surface 15.

Grâce à la présence de la couche interne de protection 40 disposée dans le passage de circulation 11 au contact du matériau abrasif circulant dans le passage 11, le matériau reste totalement à l'écart de la gaine de pression 20, ce qui garantit l'étanchéité de la conduite 10 et sa longévité.

La couche interne de protection 40 comprenant une matrice 50 élastomère, elle se déforme localement au contact du matériau abrasif. Elle est donc relativement peu soumise à l'effet de découpe ou d'écrasement provoqué par le transport du matériau abrasif.

Par ailleurs, la présence de l'ensemble de renfort longitudinal 52, formé de préférence par des éléments filiformes 54 métalliques, assure une très bonne résistance mécanique à la couche de protection 40, limitant son usure au cours du temps.

Aussi, ce renfort longitudinal 52 permet le maintien mécanique de la feuille 60 sous l'effet de son propre poids, une fois en position verticale dans la conduite 10.

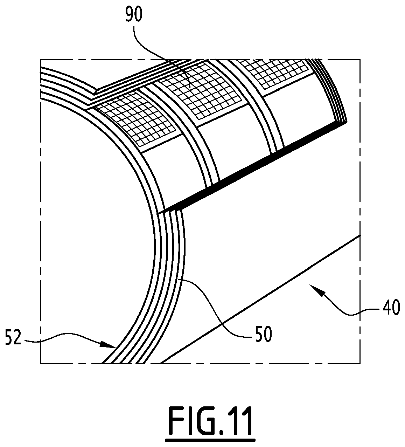

Dans une variante, représentée sur la figure 11, l'ensemble de renfort longitudinal 52 comporte un réseau de fibres de renfort non métalliques noyées dans la matrice 50. Le réseau est avantageusement un tissu technique.

Le tissu technique est par exemple un tissu de fibres d'aramide ou de polyéthylène à haut poids moléculaire Le tissu technique forme des bandes ajourées 90 noyées dans la matrice 50.

Dans l'exemple représenté sur la figure 11, les bandes ajourées 90 s'étendent chacune sur une circonférence autour de l'axe A-A', en étant noyées dans la matrice 50.

Dans une variante (non représentée), la couche interne de protection 40 est formée par un profilé continu obtenu avantageusement par extrusion.

Avantageusement, le profilé est réalisé à base de thermoplastique uréthane, thermoplastique élastomère, de caoutchouc naturel. Il présente un diamètre interne supérieur à 100 mm et une épaisseur supérieure à 10 mm.

Dans une variante, la couche interne de protection 40 est formée de la mise bout à bout de plusieurs feuilles 60 pliées.

Généralement, la conduite flexible 10 selon l'invention est apte à fonctionner à basse pression (pression égale ou inférieure à la pression ambiante) et à haute pression (pression avantageusement inférieure à 200 bar et supérieure à la pression ambiante).

Dans tout ce qui précède, la couche interne de protection 40 réalisée à partir d'un matériau élastomère peut être formée soit sous la forme d'un tuyau de grande longueur, soit sous la forme d'un tuyau de courte longueur ou encore sous la forme d'une feuille (ou bande).

La réalisation de la couche interne de protection 40 sous la forme d'un tuyau de grande longueur, de l'ordre de 40 m à 50 m, est intéressante pour des applications de conduites sous-marines de grandes longueurs pour le transport de matériaux abrasifs.

Néanmoins, la mise en oeuvre, le transport et l'installation sur le site de fabrication de la conduite selon l'invention ne donne pas entière satisfaction.

En effet, leur mise en oeuvre nécessite des espaces de travail relativement important pour permettre l'utilisation d'un mandrin rigide de grande longueur pour l'extrusion de la couche élastomérique ainsi que l'implantation d'un four de vulcanisation capable de contenir de tels tuyaux.

Aussi, de par leurs longueurs imposantes, le transport depuis leur site de fabrication jusqu'à l'usine de fabrication des conduites flexibles selon l'invention peut être amélioré. L'enroulement de ces tuyaux sur des bobines pour faciliter leur transport et/ou l'utilisation de camion comportant une semi-remorque de grande longueur n'est pas une solution totalement satisfaisante et engendre des surcoûts.

Enfin, une fois approvisionnés sur le site de fabrication des conduites flexibles selon l'invention, le stockage de ces tuyaux et/ou l'installation de ceux-ci au niveau des différents outillages pour la fabrication des conduites flexibles nécessite un espace suffisamment grand, une adaptation des outillages existants et/ou l'acquisition de nouveaux outillages. Cela a aussi pour effet de générer des coûts supplémentaires.

Aussi, la façon de rabouter les différents tronçons de tuyaux ensemble lors de la fabrication des conduites flexibles peut encore être améliorée.

La réalisation de la couche interne de protection 40 sous la forme d'un tuyau de courte longueur, de l'ordre de 5 m à 15 m, est également intéressante et présente des avantages par rapport à un tuyau de grande longueur.

En effet, leur mise en oeuvre est plus aisée puisque l'encombrement des espaces de travail est réduit.

De plus, leur transport depuis leur site de fabrication jusqu'à l'usine de fabrication des conduites flexibles selon l'invention est aussi plus aisé.

En outre, une fois approvisionnés sur le site de fabrication des conduites flexibles, on résout les problèmes d'encombrement liés au stockage et/ou d'installation. Cependant, l'utilisation d'outillages adaptés et/ou d'outillages spécifiques et à la façon de rabouter les différentes tronçons de tuyaux entre eux n'est toujours pas totalement satisfaisante et engendre un coût supplémentaire dans la fabrication des conduites flexibles.

La réalisation de la couche interne de protection 40 sous la forme d'une feuille (ou bande) permet de s'affranchir de tous les inconvénients précédemment cités.

En effet, leur mise en oeuvre est plus aisée puisqu'il devient possible d'extruder des bandes de grandes longueurs, comprise entre 50 m et plusieurs kilomètres.

Après vulcanisation de la bande, celle-ci peut ensuite facilement être enroulée autour du fût d'une bobine ou bien découpée à la longueur souhaitée pour former des feuilles que l'on empilera sur une palette de stockage. Cela permet d'améliorer aussi bien les problèmes liés à l'encombrement de l'espace de travail qu'à celui de leur transport jusqu'au site de fabrication des conduites flexibles selon l'invention.

Une fois approvisionnés sur le site de fabrication des conduites flexibles, les feuilles sont stockées plus facilement et leur installation au niveau des outillages nécessaires à la fabrication desdites conduites est plus aisée. Ainsi, les feuilles peuvent être soient enroulés puis insérées à l'intérieur d'une gaine tubulaire formant le passage de circulation des matériaux abrasifs en fin de fabrication, soient insérées puis assemblées au niveau de leurs bords latéraux avant que ladite gaine tubulaire soit extrudée au-dessus.

Ce dernier type de réalisation de la gaine interne de protection est la plus avantageuse. Elle permet de faciliter grandement leur mise en oeuvre, à leur transport et à leur installation sur le site de fabrication des conduites flexibles selon l'invention. En outre, elle permet de réduire significativement les coûts inhérents à ces actions.

## Revendications

1. Conduite flexible non liée (10) de transport d'un matériau abrasif, comprenant :
- au moins une gaine tubulaire (20) délimitant un passage (11) de circulation du matériau abrasif ;
- au moins une couche (34, 36) d'armures de traction disposée extérieurement par rapport à la gaine tubulaire (20), la couche d'armures (34, 36) comprenant une pluralité d'éléments d'armure (44) filiformes,
**caractérisée en ce qu'**elle comprend en outre une couche interne de protection (40) disposée à l'intérieur de la gaine tubulaire (20) dans le passage de circulation (11), la couche interne de protection (40) comportant une matrice (50) en élastomère et un ensemble (52) de renfort longitudinal noyé dans la matrice (50).

2. Conduite (10) selon la revendication 1, **caractérisée en ce que** l'ensemble de renfort longitudinal (52) comporte une pluralité d'éléments métalliques filiformes (54) noyés dans la matrice (50).

3. Conduite (10) selon l'une des revendications 1 ou 2, **caractérisée en ce que** l'ensemble de renfort longitudinal (52) comporte un réseau de fibres de renfort non métalliques noyé dans la matrice (50), avantageusement un tissu technique.

4. Conduite (10) selon l'une quelconque des revendications précédentes, **caractérisée en ce que** la matrice (50) est formée à base d'un élastomère choisi parmi un caoutchouc, notamment un caoutchouc naturel, ou un caoutchouc artificiel type caoutchouc de styrène butadiène, caoutchouc de butadiène, caoutchouc de nitrile butadiène, caoutchouc de chloroprène, caoutchouc de butyle, caoutchouc d'éthylène-propylène-diène monomère, un thermoplastique polyuréthane, ou un thermoplastique élastomère.

5. Conduite (10) selon l'une quelconque des revendications précédentes, **caractérisée en ce que** la couche interne de protection (40) comporte au moins une feuille (60) de matériau continu repliée sur elle-même suivant les bords latéraux (62) de la feuille (60), les bords latéraux (62) étant avantageusement placés bout à bout, et un ensemble (66) d'assemblage des bords latéraux (62) de la feuille (60), avantageusement par collage, agrafage, encliquetage, sertissage, ou/et enrubannage

6. Conduite (10) selon l'une quelconque des revendications 1 à 4, **caractérisée en ce que** la couche interne de protection (40) est formée par un profilé continu obtenu avantageusement par extrusion.

7. Conduite (10) selon l'une quelconque des revendications précédentes, **caractérisée en ce que** l'épaisseur de la couche interne de protection (40) est supérieure à 10 mm, et est notamment comprise entre 15 mm et 30 mm.

8. Conduite (10) selon l'une quelconque des revendications précédentes, **caractérisé en ce que** le diamètre interne de la couche interne de protection (40) est supérieur à 10 cm, et est notamment compris entre 15 cm et 35 cm.

9. Conduite (10) selon l'une quelconque des revendications précédentes, **caractérisé en ce que** la gaine tubulaire (20) est fixée sur la couche interne de protection (40).

10. Conduite (10) selon l'une quelconque des revendications précédentes, **caractérisée en ce que** sa longueur est supérieure à 10 m.

11. Procédé de fabrication d'une conduite flexible (10) non liée de transport d'un matériau abrasif comprenant les étapes suivantes :
- fabrication d'au moins une gaine tubulaire (20) ;
- disposition d'au moins une couche (34, 36) d'armures de traction extérieurement par rapport à la gaine tubulaire (20), la couche d'armures (34, 36) comprenant une pluralité d'éléments d'armure (44) filiformes,
**caractérisé par** l'étape suivante :
- disposition d'une couche interne de protection (40) à l'intérieur de la gaine tubulaire (20) dans le passage de circulation (11), la couche interne de protection (40) comportant une matrice (50) en élastomère et un ensemble (52) de renfort longitudinal noyé dans la matrice.

12. Procédé selon la revendication 11, **caractérisé en ce que** la disposition de la couche interne de protection (40) dans la gaine tubulaire (20) s'effectue lors de la fabrication de la gaine tubulaire (20), avantageusement par extrusion de la gaine tubulaire (20) au-dessus de la couche interne de protection (40).

13. Procédé selon l'une quelconque des revendications 11 à 12, **caractérisé en ce qu'**il comporte une étape préliminaire de fabrication de la couche interne de protection (40), l'étape préliminaire de fabrication comprenant les phases suivantes :
- fourniture d'une feuille (60) comportant une matrice (50) en élastomère et un ensemble (52) de renfort longitudinal noyé dans la matrice (50) ;
- enroulement de la feuille (60) autour d'un axe d'enroulement (A-A') pour former une couche interne de protection (40) tubulaire.

14. Procédé selon la revendication 13, **caractérisé en ce que** l'étape préliminaire de fabrication comporte, après l'enroulement de la feuille (60), la fixation des bords latéraux (62) de la feuille (60) suivant une génératrice, avantageusement par collage, agrafage, encliquetage, sertissage, ou/et enrubannage

15. Utilisation d'une conduite (10) selon l'une quelconque des revendications 1 à 10 pour le transport d'un matériau abrasif entre un ensemble de fond (16) comportant un dispositif (17) de prélèvement et/ou de collecte de matériau sur le fond d'une étendue d'eau (13) et un ensemble de surface (15) situé à la surface de l'étendue d'eau (13).

## Patentansprüche

1. Flexible ungebundene Leitung (10) zum Transport eines schleifenden Materials, aufweisend:
- wenigstens eine röhrenförmige Hülle (20), die eine Passage (11) für den Durchlauf des schleifenden Materials begrenzt,
- wenigstens eine Schicht (34, 36) Zug-Bewehrungen, die außen von der röhrenförmigen Hülle (20) angeordnet ist, wobei die Schicht Bewehrungen (34, 36) eine Mehrzahl von fadenförmigen Bewehrungselementen (44) aufweist,
**dadurch gekennzeichnet, dass** sie ferner aufweist eine innere Schutzschicht (40), die im Inneren der röhrenförmigen Hülle (20) in der Durchlauf-Passage (11) angeordnet ist, wobei die innere Schutzschicht (40) eine Matrix (50) aus Elastomer und eine in die Matrix (50) eingebettete Einrichtung (52) zur Längsverstärkung aufweist.

2. Leitung (10) gemäß Anspruch 1, **dadurch gekennzeichnet, dass** die Längsverstärkungs-Einrichtung (52) eine Mehrzahl von metallischen, fadenförmigen Elementen (54) aufweist, die in die Matrix (50) eingebettet sind.

3. Leitung (10) gemäß einem der Ansprüche 1 oder 2, **dadurch gekennzeichnet, dass** die Längsverstärkungs-Einrichtung (52) eine Netz aus nicht-metallischen Verstärkungsfasern aufweist, das in die Matrix (50) eingebettet ist, vorteilhafterweise ein technisches Gewebe.

4. Leitung (10) gemäß irgendeinem der vorhergehenden Ansprüche, **dadurch gekennzeichnet, dass** die Matrix (50) gebildet ist auf Basis eines Elastomers, der ausgewählt ist aus Kautschuk, insbesondere Natur-Kautschuk oder Kautschuk vom künstlichen Typ Styrol-Butadien-Kautschuk, Butadien-Kautschuk, Nitril-Butadien-Kautschuk, Chlor-Kautschuk, Butyl-Kautschuk, Ethylen-Propylene-Dien-Monomer-Kautschuk, eines thermoplastischen Polyurethan, oder eines thermoplastischen Elastomers.

5. Leitung (10) gemäß irgendeinem der vorhergehenden Ansprüche, **dadurch gekennzeichnet, dass** die innere Schutzschicht (40) aufweist wenigstens ein Blatt (60) aus kontinuierlichem Material aufweist, das auf sich geschlagen ist entlang der seitlichen Ränder (62) des Blatts (60), wobei die seitlichen Ränder (62) vorteilhafterweise auf Stoß platziert sind, und eine Einrichtung (66) zur Zusammenfügung der seitlichen Ränder (62) des Blatts (60), vorteilhafterweise durch Kleben, Klammern, Einrasten, Bördeln und/oder Bandagieren.

6. Leitung (10) gemäß irgendeinem der Ansprüche 1 bis 4, **dadurch gekennzeichnet, dass** die innere Schutzschicht (40) von einem kontinuierlichen Profil gebildet ist, das vorteilhafterweise durch Extrusion erlangt ist.

7. Leitung (10) gemäß irgendeinem der vorhergehenden Ansprüche, **dadurch gekennzeichnet, dass** die Dicke der inneren Schutzschicht (40) größer als 10mm ist, und insbesondere zwischen 15mm und 30mm liegt.

8. Leitung (10) gemäß irgendeinem der vorhergehenden Ansprüche, **dadurch gekennzeichnet, dass** der Innendurchmesser der inneren Schutzschicht (40) größer als 10 cm ist, insbesondere zwischen 15 cm und 35 cm liegt.

9. Leitung (10) gemäß irgendeinem der vorhergehenden Ansprüche, **dadurch gekennzeichnet, dass** die röhrenförmige Hülle (20) an der inneren Schutzschicht (40) fixiert ist.

10. Leitung (10) gemäß irgendeinem der vorhergehenden Ansprüche, **dadurch gekennzeichnet, dass** ihre Länge größer als 10 m ist.

11. Verfahren zur Herstellung einer flexiblen ungebundenen Leitung (10) zum Transport eines schleifenden Materials, aufweisend die folgenden Schritte:
- Herstellen wenigstens einer röhrenförmigen Hülle (20),
- Anordnen wenigstens einer Schicht (34, 36) Zug-Bewehrungen außen von der röhrenförmigen Hülle (20), wobei die Schicht Bewehrungen (34, 36) aufweist eine Mehrzahl von fadenförmigen Bewehrungselementen (44),
**dadurch gekennzeichnet** durch den folgenden Schritt:
- Anordnen einer inneren Schutzschicht (40) im Inneren der röhrenförmigen Hülle (20) in der Durchlauf-Passage (11), wobei die innere Schutzschicht (40) eine Matrix (50) aus Elastomer und eine in die Matrix eingebettete Einrichtung (52) zur Längsverstärkung aufweist.

12. Verfahren gemäß Anspruch 11, **dadurch gekennzeichnet, dass** das Anordnen der inneren Schutzschicht (40) in der röhrenförmigen Hülle (20) durchgeführt wird während des Herstellens der röhrenförmigen Hülle (20), vorteilhafterweise durch Extrudieren der röhrenförmigen Hülle (20) auf die innere Schutzschicht (40).

13. Verfahren gemäß irgendeinem der Ansprüche 11 bis 12, **dadurch gekennzeichnet, dass** es aufweist einen vorbereitenden Schritt des Herstellens der inneren Schutzschicht (40), wobei der vorbereitende Schritt des Herstellens die folgenden Phasen aufweist:
- Bereitstellen eines Blatts (60), das eine Matrix (50) aus Elastomer und eine in die Matrix (50) eingebettete Einrichtung (52) zur Längsverstärkung aufweist,
- Wickeln des Blatts (60) um eine Wickelachse (A-A') zum Bilden einer röhrenförmigen inneren Schutzschicht (40).

14. Verfahren gemäß Anspruch 13, **dadurch gekennzeichnet, dass** der vorbereitende Schritt des Herstellens aufweist, nach dem Wickeln des Blatts (60), das Fixieren der seitlichen Ränder (62) des Blatts (60) entlang einer Mantellinie, vorteilhafterweise durch Kleben, Klammern, Einrasten, Bördeln und/oder Bandagieren.

15. Verwendung einer Leitung (10) gemäß irgendeinem der Ansprüche 1 bis 10 für den Transport eines schleifenden Materials zwischen einer Bodeneinrichtung (16), die aufweist eine Vorrichtung (17) zur Entnahme und/oder zum Sammeln von Material am Boden eines Gewässers (13) und eine Oberflächeneinrichtung (15), die an der Oberfläche des Gewässers (13) angeordnet ist.

## Claims

1. An unbonded flexible pipe (10) for transporting an abrasive material, comprising:
- at least one tubular sheath (20) delimiting a passage (11) for circulation of the abrasive material;
- at least one layer (34, 36) of tensile armors positioned externally with respect to the tubular sheath (20), the armor layer (34, 36) comprising a plurality of filiform armor elements (44),
**characterized in that** it further comprises a protective internal layer (40) positioned inside the tubular sheath (20) in the circulation passage (11), the protective internal layer (40) including an elastomeric matrix (50) and a longitudinal reinforcement assembly (52) embedded in the matrix (50).

2. The pipe (10) according to claim 1, **characterized in that** the longitudinal reinforcement assembly (52) includes a plurality of filiform metal elements (54) embedded in the matrix (50).

3. The pipe (10) according to one of claims 1 or 2, **characterized in that** the longitudinal reinforcement assembly (52) includes a network of non-metal reinforcement fibers embedded in the matrix (50), advantageously a technical fabric.

4. The pipe (10) according to any of the preceding claims, **characterized in that** the matrix (50) is formed on the basis of an elastomer selected from among a rubber, notably natural rubber, or an artificial rubber of the styrene-butadiene rubber, butadiene rubber, nitrile-butadiene rubber, chloroprene rubber, butyl rubber, ethylene-propylenediene monomeric rubber type, a polyurethane thermoplastic, or an elastomeric thermoplastic.

5. The pipe (10) according to any of the preceding claims, **characterized in that** the protective internal layer (40) includes at least one sheet (60) of a continuous material folded on itself along the side edges (62) of the sheet (60), the side edges (62) being advantageously placed end-to-end, and an assembly (66) for assembling the side edges (62) of the sheet (60), advantageously by adhesive bonding, stapling, snap-on fastening, crimping, and/or wrapping

6. The pipe (10) according to any of claims 1 to 4, **characterized in that** the protective internal layer (40) is formed by a continuous profile advantageously obtained by extrusion.

7. The pipe (10) according to any of the preceding claims, **characterized in that** the thickness of the protective internal layer (40) is greater than 10 mm, and is notably comprised between 15 mm and 30 mm.

8. The pipe (10) according to any of the preceding claims, **characterized in that** the internal diameter of the protective internal layer (40) is greater than 10 cm, and is notably comprised between 15 cm and 35 cm.

9. The pipe (10) according to any of the preceding claims, **characterized in that** the tubular sheath (20) is attached on the protective internal layer (40).

10. The pipe (10) according to any of the preceding claims, **characterized in that** its length is greater than 10 m.

11. A method for manufacturing an unbonded flexible pipe (10) for transporting an abrasive material comprising the following steps:
- manufacturing at least one tubular sheath (20);
- positioning at least one tensile armor layer (34, 36) externally with respect to the tubular sheath (20), the armor layer (34, 36) comprising a plurality of filiform armor elements (44),
**characterized by** the following step:
- positioning a protective internal layer (40) inside the tubular sheath (20) in the circulation passage (11), the protective internal layer (40) including an elastomeric matrix (50) and a longitudinal reinforcement assembly (52) embedded in the matrix.

12. The method according to claim 11, **characterized in that** the positioning of the protective internal layer (40) in the tubular sheath (20) is then carried out during the manufacturing of the tubular sheath (20), advantageously by extrusion of the tubular sheath (20) above the protective internal layer (40).

13. The method according to any of claims 11 to 12, **characterized in that** it includes a preliminary step for manufacturing the protective internal layer (40), the preliminary manufacturing step comprising the following phases:
- providing a sheet (60) including an elastomeric matrix (50) and a longitudinal reinforcement assembly (52) embedded in the matrix (50);
- winding the sheet (60) around a winding axis (A-A') in order to form a tubular protective internal layer (40).

14. The method according to claim 13, **characterized in that** the preliminary manufacturing step includes, after winding the sheet (60), the attachment of the side edges (62) of the sheet (60) along a generatrix, advantageously by adhesive bonding, stapling, snap-on fastening, crimping, and/or wrapping

15. The use of a pipe (10) according to any of claims 1 to 10 for transporting an abrasive material between a bottom assembly (16) including a device (17) for picking up and/or collecting a material on the bottom of an extent of water (13) and a surface assembly (15) located at the surface of the extent of water (13).
